(19) Europäisches Patentamt
European Patent Office
Office européen des brevets

(11) Veröffentlichungsnummer: **0 012 380**
**B1**

(12) # EUROPÄISCHE PATENTSCHRIFT

(45) Veröffentlichungstag der Patentschrift: **04.08.82**

(51) Int. Cl.³: **C 08 G 18/38**, C 08 G 73/06, C 09 D 3/48, H 01 B 3/30, C 09 J 3/16

(21) Anmeldenummer: **79104976.0**

(22) Anmeldetag: **06.12.79**

(54) **Verfahren zur Herstellung von Amidimidgruppen aufweisenden Polyhydantoinen, deren Verwendung zur Herstellung hitzebeständiger Beschichtungsmaterialien sowie daraus hergestellte Lackmischungen.**

(30) Priorität: **16.12.78 DE 2854383**

(43) Veröffentlichungstag der Anmeldung: **25.06.80 Patentblatt 80/13**

(45) Bekanntmachung des Hinweises auf die Patenterteilung: **04.08.82 Patentblatt 82/31**

(84) Benannte Vertragsstaaten: **AT DE FR GB IT**

(56) Entgegenhaltungen:
**FR-A-1 575 421**
**FR-A-2 147 155**
**FR-A-2 190 870**
**US-A-3 397 253**
**US-A-4 093 604**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Lewalter, Jürgen, Dr., Bergstrasse 88, D-5068 Odenthal (DE)**
Erfinder: **Rottmaier, Ludwig, Ing.-grad., Bergstrasse 85, D-5068 Odenthal (DE)**
Erfinder: **Merten, Rudolf, Dr., Berta-von-Suttner-Strasse 55, D-5090 Leverkusen 1 (DE)**
Erfinder: **Zecher, Wilfried, Dr., Treptower Strasse 6, D-5090 Leverkusen (DE)**
Erfinder: **Dünwald, Willi, Dr., Geschwister-Scholl-Strasse 16, D-5090 Leverkusen (DE)**
Erfinder: **Schulte, Bernhard, Dr., Südwall 80A, D-4150 Krefeld (DE)**

EP 0 012 380 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Amidimidgruppen aufweisenden Polyhydantoinen, deren Verwendung zur Herstellung hitzebeständiger Beschichtungsmaterialien sowie daraus hergestellte Lackmischungen

Verfahren zur Herstellung von Polyhydantoin-Kunststoffen durch Umsetzung von Glyzinesterderivaten und Polyisocanaten sind bereits bekannt, wie beispielsweise aus der US-Patentschrift 3 397 253 = BE 678 282.

Diese Verfahrensweise hat nachfolgend noch zahlreiche Varianten erfahren, bei denen diese Hydantoin-Gruppen enthaltenden Polymeren durch Zugabe oder Einbau von weiteren funktionellen Gruppierungen wie Amid-, Imid- oder Estergruppen variiert werden. Dabei werden eine Vielzahl von unterschiedlichen Lösungsmitteln empfohlen. Hydantoingruppen enthaltende Polymere mit dem besten Werteniveau erhält man bisher nur, wenn phenolische Lösungsmittel wie Phenol, Kresole oder Xylenole allein oder in Abmischungen eingesetzt werden.

Bei der Verwendung der phenolischen Lösungsmittel ergeben sich aber Umweltbelastungen, so daß bei einer Applikation aus phenolischen Lösungsmitteln aufwendige Rückgewinnungsanlagen zur quantitativen Wiedergewinnung dieser Lösungsmittel bzw. ihrer quantitativen Entfernung aus Abwasser und Abluft erforderlich sind.

Es besteht somit ganz erhebliches technisches Interesse an einem Elektroisolierlack mit den hervorragenden Eigenschaften der Polyhydantoine, der sich in umweltfreundlichen Lösungsmitteln herstellen und verarbeiten läßt.

Gegenstand der Erfindung ist daher ein Verfahren zur Herstellung von Amidimidgruppen aufweisenden Poly(thio)hydantoinen durch Umsetzung von polyfunktionellen $\alpha$-Aminocarbonsäurederivaten und organischen Polyiso(thio)cyanaten oder entsprechenden Iso(thio)cyanat-Abspaltern und gegebenenfalls unter Mitverwendung von Hydroxylgruppen aufweisenden Polyestern in Lösungsmitteln, das dadurch gekennzeichnet ist, daß die Umsetzung unter Mitverwendung von cyclischen Carbonsäureanhydridverbindungen, die noch eine weitere kondensationsfähige Gruppe enthalten, in $\gamma$-Butyrolacton und gegebenenfalls weiteren nichtphenolischen Lösungsmitteln erfolgt.

Die so hergestellten Polyamidimidhydantoine können direkt, gegebenenfalls nach Zugabe von weiterem Lacton oder anderen umweltfreundlichen, nicht phenolischen Lösungsmitteln, als Lacke appliziert werden.

Ein weiterer Gegenstand der Erfindung sind daher auch Lackmischungen, insbesondere für Einbrennlacke, enthaltend Polymerlösungen, die nach den erfindungsgemäßen Verfahren hergestellt wurden.

Diese Lacke haben ausgezeichnete Eigenschaften, die den Lacken — hergestellt aus phenolischen Lösungsmitteln — zumindest entsprechen. Dies ist umso überraschender als sowohl Lacke aus reinen Polyhydantoinlösungen als auch Lacke aus reinen Polyamidimidlösungen, die unter Einsatz der umweltfreundlichen Lösungsmittel hergestellt wurden, diese Werte nicht aufweisen.

Das erfindungsgemäß verwendete Lösungsmittel ist $\gamma$-Butyrolacton.

Dieses Lösungsmittel kann gegebenenfalls, insbesondere zur Lackherstellung, mit geeigneten und umweltfreundlichen Lösungsmitteln abgemischt werden, z. B. mit Benzoesäureäthylester, Essigsäurebenzylester, Propylencarbonat, Benzylalkohol, Phenoxyäthanol, Acetophenon. Ferner können Glykole und deren Derivate, wie Glykolmono- oder -dialkylether, insbesondere Ethylenglykol sowie deren Mono- und Diether wie Methylglykol und Dipropylenglykol-diethylether und deren Acetate wie Ethylglykolacetat und Methylglykolacetat verwendet werden. Als Verschnittmittel können außerdem aliphatische und aromatische Kohlenwasserstoffe wie Cyclohexan, Xylol, Toluol, und deren technische Gemische wie Solvesso 100 und Solventnaphtha eingesetzt werden.

Für das erfindungsgemäße Verfahren werden vorzugsweise polyfunktionelle, bevorzugt difunktionelle $\alpha$-Aminocarbonsäurederivate der allgemeinen Formel (I)

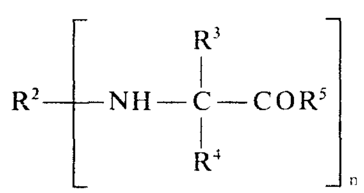

(I)

verwendet, worin $R^2$ für einen gegebenenfalls mit Halogen, Alkyl- mit $C_1-C_{10}$ und/oder Arylgruppen mit $C_6-C_{12}$ substituierten Alkylrest mit 2–20 C-Atomen, einen Arylrest mit 5–12 C-Atomen, einen Cycloalkylrest mit 5–12 C-Atomen, einen Alkyl-Arylrest mit 6–20 C-Atomen und einen Heteroatome wie N und/oder O oder S im Ring enthaltenden Aryl- oder Cycloalkylrest mit 5–12 C-Atomen steht, $R^3$ und $R^4$ Wasserstoff, einen Alkylrest mit $C_1-C_{20}$, einen Arylrest mit $C_5-C_{12}$ oder einen Aralkylrest mit $C_6-C_{20}$, $R^5$ eine Hydroxylgruppe, eine Aminogruppe, eine $C_1-C_{20}$ Alkylamino-, $C_1-C_{20}$ Dialkylamino-, $C_1-C_{20}$ Alkoxy- oder $C_5-C_{12}$-Aroxygruppe und n eine ganze Zahl von 2 bis 4, vorzugsweise 2 bedeuten. Sie sind aus der US-Patentschrift 3 397 253 bekannt.

Aromatische Reste für $R^2$ sind bevorzugt insbesondere die von Benzol, Azobenzol, Naphthalin,

Anthracen, Diphenyl, Triphenylmethan, Diphenylmethan und Diphenyläther. Diese Reste können auch ein- oder mehrfach substituiert sein, beispielsweise durch $C_1-C_{20}$ Alkyl-, (Methyl-), Halogen- (Chlor-), Nitro-, $C_1-C_{20}$ Alkoxy- (Methoxy-), $C_1-C_{20}$ Dialkylamino- (Dimethylamino-), Acyl- (Acetyl-), $C_2-C_{17}$ Carbalkoxy- (Carbometh- oder -äthoxy-) und Cyanogruppen. Bevorzugt sind die gegebenenfalls ein- oder zweifach durch Methyl und/oder Chlor oder ein- oder zweifach mit Carboxylgruppen substituierten Reste, insbesondere von Benzol, Naphthalin, Diphenylmethan oder Diphenyläther.

Die Reste $R^3$ und $R^4$ können auch als Glieder eines cyclischen $C_2-C_{20}$-Alkylrestes miteinander verknüpft sein, sowie durch Halogen (Chlor, Brom), Cyan, Hydroxycarbonyl, Aminocarbonyl, Alkoxycarbonyl oder Aroxycarbonyl substituiert sein.

Die Herstellung der erfindungsgemäß als Ausgangsmaterialien zu verwendenden $\alpha$-Aminocarbonsäurederivate (Glycinester) ist im Prinzip bekannt und kann z. B. durch Umsetzung von aromatischen Aminen oder Aminocarbonsäuren mit Halogenessigsäure oder ihren Derivaten oder auch durch Kondensation mit Blausäure und Aldehyden oder Ketonen unter nachfolgender Umwandlung der Nitrilgruppe in z. B. Carbonsäure, Ester oder Amid erfolgen.

Als cyclische Carbonsäureanhydridverbindungen werden für das erfindungsgemäße Verfahren vorzugsweise solche der allgemeinen Formel II eingesetzt

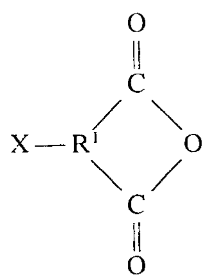

(II)

in der $R^1$ für einen aliphatischen Rest mit $C_2-C_{10}$, einen cycloaliphatischen Rest mit $C_5-C_{10}$ oder einen aromatischen Rest mit $C_6-C_{20}$ steht und X eine weitere cyclische Anhydridgruppierung, eine Carboxyl- oder OH-Gruppe bedeutet. Vorzugsweise bedeutet X eine Carboxylgruppe.

Folgende Verbindungen seien als Beispiele aufgeführt:

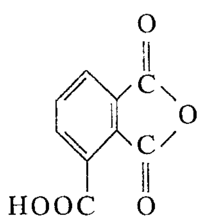

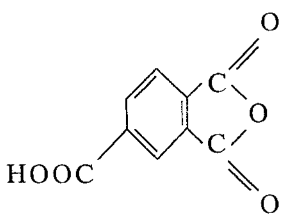

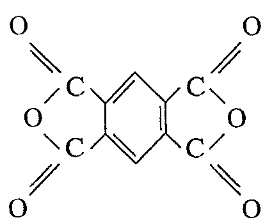

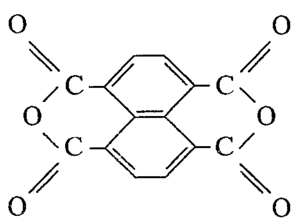

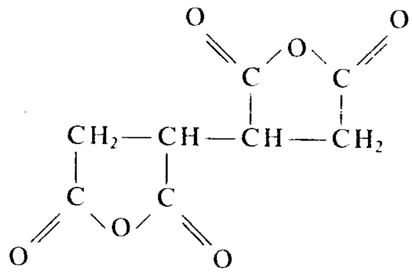

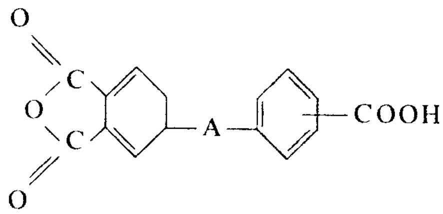

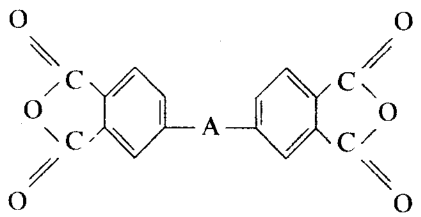

mit

A = 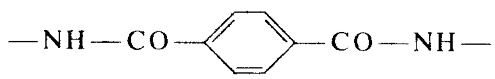

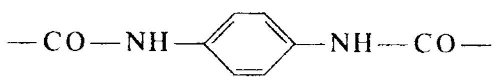

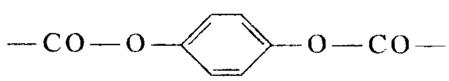

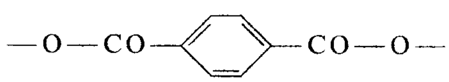

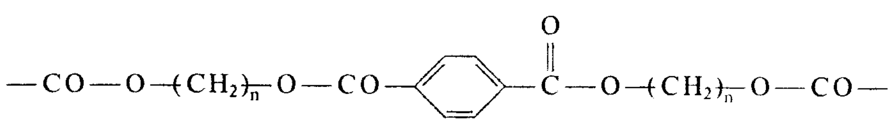

n = 2–6

$-CO-O-(CH_2)_n-O-CO-$

$-O-$ $-S-$ $-SO_2-$ $-CO-$

$-N{=}N-$ $-CH_2-$ 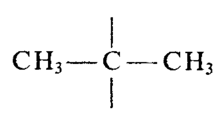

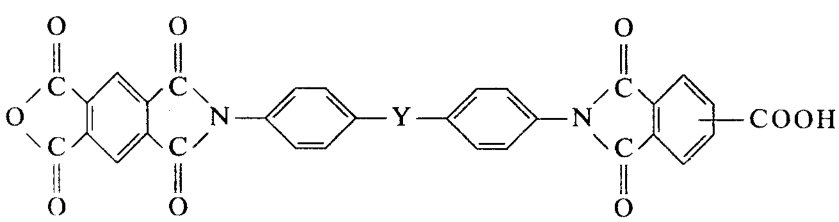

$$Y = \quad -O- \quad -S- \quad -SO_2-$$

$$-CO- \quad -N{=}N-$$

$$-CH_2- \quad CH_3-\overset{|}{\underset{|}{C}}-CH_3$$

Anstelle der Carbonsäureanhydride können auch andere Säurederivate wie z. B. die entsprechenden Ester oder die Polycarbonsäuren selbst eingesetzt werden, die im Verlaufe der Reaktion wie die Säureanhydride reagieren. Vorzugsweise wird Trimellitsäureanhydrid eingesetzt. Die Carbonsäureanhydride können aber auch durch aromatische und aliphatische Dicarbonsäure wie Isophthalsäure, Terephthalsäure, Adipinsäure in Mengen bis zu 90 Mol-% ersetzt werden.

Als erfindungsgemäß einzusetzende Ausgangskomponenten kommen aliphatische, cycloaliphatische, araliphatische aromatische und heterocyclische Polyisocyanate in Betracht (vgl. Annalen 562, Seiten 75 bis 136), beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanato-methylcyclohexan (DAS 1 202 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Napthylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den britischen Patentschriften 874 430 und 848 671 beschrieben werden, perchlorierte Arylpolyisocyanate, wie sie z. B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der US-Patentschrift 3 492 330 beschrieben werden, Allophanatgruppen aufweisende Polyisocyanate, wie sie z. B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z. B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z. B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z. B. in der deutschen Patentschrift 1 101 394, in der britischen Patentschrift 889 050 und in der französischen Patentschrift 7 017 514 beschrieben werden, durch Telomerisationsreaktionen hergestellte Polyisocyanate, wie sie z. B. in der belgischen Patentschrift 723 640 beschrieben werden, Estergruppen aufweisende Polyisocyanate, wie z. B. in den britischen Patentschriften 956 474 und 1 072 956, in der US-Patentschrift 3 567 763 und in der deutschen Patentschrift 1 231 688 genannt werden, Umsetzungsprodukte der obengenannten Isocyanate mit Acetalen gemäß der deutschen Patentschrift 1 072 358.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Vorzugsweise eignen sich Isocyanate der allgemeinen Formel (III)

$$R^6(-NCO)_z \qquad (III)$$

in denen $R^6$ für einen, gegebenenfalls mit Halogen, Alkyl- mit $C_1-C_{10}$ und/oder Arylgruppen mit $C_6-C_{12}$ substituierten Alkylrest mit 2–20 C-Atomen, einen Arylrest mit 5–12 C-Atomen, einen Cycloalkylrest mit 5–12 C-Atomen, einen Alkyl-Arylrest mit 6–20 C-Atomen und einen Heteroatome wie N und/oder O und/oder S enthaltenden Aryl- oder Cycloalkylrest mit 5–12 C-Atomen steht. z ist eine ganze Zahl von 1–4, vorzugsweise 1–3, besonders bevorzugt 2. Besonders bevorzugt sind aliphatische Reste mit 2–12 C-Atomen oder Arylreste wie Phenyl, Tolyl, Naphthyl, Diphenylmethan- und Diphenylether.

Bevorzugt verwendet werden die technisch leicht zugänglichen Gemische aus Toluylen-diisocyanaten, m-Phenylendiisocyanat, sowie phosgenierte Kondensate aus Anilin und Formaldehyd mit Polyphenylen-methylen-struktur und die symmetrischen Verbindungen 4,4'-Diisocyanatodiphenylmethan, 4,4'-Diisocyanatodiphenyläther, p-Phenylendiisocyanat und 4,4'-Diisocyanatodiphenyldimethylmethan sowie Isophorondiisocyanat und Hexamethylendiisocyanat.

Die Isocyanate können in freier Form, ferner zum Teil oder vollständig auch in Form ihrer beim Umsatz mit reaktiven Wasserstoff enthaltenden Verbindungen zugänglichen und unter den

Reaktionsbedingungen als Isocyanat-Abspalter reagierenden Derivate eingesetzt werden.

Vorzugsweise werden als Abspalter die Additionsprodukte aus Lactamen, Oximen und CH-aciden Verbindungen sowie die aus aliphatischen Mono- und Polyhydroxy-Verbindungen erhaltenen Carbamidsäureester, beispielsweise der allgemeinen Formel

$$R^6 \left( -NH-\underset{\underset{O}{\|}}{C}-O-M \right),$$

bzw.

$$\left[ -\underset{\underset{O}{\|}}{C}-NH-R^6-NH-\underset{\underset{O}{\|}}{C}-O-Q-O- \right],$$

eingesetzt, worin R6 und z die oben angegebene Bedeutung haben und M der organische Rest einer Monohydroxyverbindung bzw. Q der organische Rest einer bis- oder trisfunktionellen Hydroxyverbindung, vorzugsweise M und Q, gleich oder verschieden, ein aliphatischer Rest mit 1–10 C-Atomen, ein cycloaliphatischer Rest mit 5–10 C-Atomen, ein aliphatisch-aromatischer Rest mit 7–12 C-Atomen und y für eine ganze Zahl von 1 bis 1000, vorzugsweise von 1 bis 100 steht.

Als Beispiele seien die Carbamidsäureester aus aliphatischen Monoalkoholen wie Methanol, Äthanol, Propanol, Isopropanol, Butanol, Isobutanol, Cyclohexanol, Allylalkohol, Benzylalkohol und aliphatische Di- oder Polyole wie Äthylenglykol und Trimethylolpropan, sowie die entsprechenden $C_1-C_6$ Monoalkyläther, weiterhin die Additionsprodukte mit Pyrrolidon-(2), Caprolactam, Butanonoxim, Malonester, Acetessigester und Acetophenon aufgeführt.

Die Isocyanat-Abspalter können als solche eingesetzt oder erst in situ durch Umsetzung mit den entsprechenden Reaktanten erzeugt werden.

Anstelle der genannten (Poly)Isocyanate können auch die analogen (Poly)-Isothiocyante als Ausgangsmaterialien benutzt werden.

Das Verfahren wird im allgemeinen so durchgeführt, daß man die Ausgangskomponenten in einem Lacton und evtl. in einem weiteren, leicht abzudestillierenden, inerten Lösungsmittel löst, das Polyiso(thio)cyanat zugibt und längere Zeit erhitzt, wobei das entstandene Polymerisat in Lösung bleibt. Es kann durch Abdestillieren des Lösungsmittels oder durch Ausfällen mit Lösungsmitteln wie Äthanol, Aceton oder Wasser isoliert werden. Die Menge der Ausgangsverbindungen kann so gewählt werden, daß pro Mol der Summe der reaktiven Gruppen mit 0,5 bis 10 Mol Iso(thio)cyanatgruppen umgesetzt werden.

Bei dem erfindungsgemäßen Verfahren können 1–99, vorzugsweise 10–90 Mol-% der $\alpha$-Aminocarbonsäurederivate durch die cyclische Anhydridverbindung ersetzt werden.

Die Reaktionstemperaturen werden zwischen 0 bis 500°C gewählt. Bevorzugt arbeitet man bei 20–400°C.

Die auftretenden Reaktionen können mit den aus der Polyhydantoinherstellung bekannten Katalysatoren, z. B. Metallalkoholaten, tert. Aminen, beschleunigt werden.

Bei dem Verfahren der vorliegenden Erfindung können auch andere polymere Stoffe, z. B. Polyester, Polyamide, Polyurethane, Polyolefine, Polyacetale, Polyepoxide, Polyimide, Polyamidimide, Polyimino-Polyester, Polyimidisocyanate, mitverwendet werden. Solche Materialien können den fertigen Polymeren der vorliegenden Erfindung zugemischt werden, können aber auch mit einpolymerisiert werden.

Eine besondere Ausführungsform des Verfahrens besteht in der Mitverwendung von Hydroxylgruppen enthaltenden Polyestern unter Einsatz überschüssiger Mengen an Iso(thio)-cyanatkomponente, die zu einer Kombination von (Thio)-Hydantoin- und Urethan-Bildung führt. Zu diesem Zweck werden z. B. Abmischungen aus der Polyhydroxylverbindung, Polyiso(thio)cyanat(derivat) und Polyglycinderivat, gegebenenfalls nach Vorkondensation von zwei dieser Komponenten, in einem gleichzeitigen endgültigen Arbeitsgang in den Kunststoff eingeführt.

Als Hydroxylgruppen enthaltende Polyester werden die bekannten Typen eingesetzt, wie sie aus Polycarbonsäuren, z. B. Bernstein-, Adipin-, Sebacin-, Phthal-, Isophthal-, Terephthal-, Öl-Säure und Polyalkoholen, z. B. Glykol, Diäthylenglykol, Triäthylenglykol, Propylenglykol, Dipropylenglykol, Glycerin, Trimethylolpropen, Pentaerythrit, in üblicher Weise erhalten werden können.

Die nach dem Verfahren der Erfindung erhaltenen Polymerisate sind temperaturbeständige Kunststoffe, die etwa bis 350°C stabil bleiben und ausgezeichnete mechanische Eigenschaften besitzen. Sie können die für Kunststoffe üblichen Zusätze wie Füllstoffe, Pigmente, Antioxidantien, Weichmacher enthalten.

Insbesondere eignen sich die erfindungsgemäß erhaltenen Polymeren zur Lackierung von Metallen, insbesondere Drähten, zur Herstellung von Elektroisolierungen. Dabei werden die erfindungsgemäß hergestellten Polymerlösungen gegebenenfalls durch Zugabe von weiterem Lacton oder einem

anderen umweltfreundlichen Lösungsmittel auf einen Feststoffgehalt von 5 Gew.-% bis 80 Gew.-%, vorzugsweise 10–30 Gew.-%, verdünnt und gegebenenfalls nach Abmischen mit einer weiteren Lackkomponente, vorzugsweise einem Polyester, die Lacklösung nach bekannten Verfahren aufgebracht. Nach dem Einbrennen erhält man Lacke mit einer ausgezeichneten Temperaturbeständigkeit und Elektroisolierung.

Beispiel 1

275 g 4,4'-Diisocyanato-diphenylmethan werden in 410 g Butyrolacton gelöst und bei 45° C mit 40 g 4,4'-Bis-(methoxycarbonylisopropylamino)-diphenylmethan und 192 g Trimellitsäureanhydrid versetzt. Dann wird unter Rühren 2 Stunden auf 45°, 4 Stunden auf 80°, 4 Stunden auf 120°, 2 Stunden auf 180° und 4 Stunden auf 205° erhitzt. Das Polyhydantoin-imid-amid wird als ca. 50%ige braune viskose Lösung mit im IR-Spektrum für Hydantoine und Imide charakteristischen Banden bei 1725 und 1775 $cm^{-1}$ und einer Amid-Bande bei 1675 $cm^{-1}$ erhalten und noch heiß mit N-Methylpyrrolidon auf einen Festgehalt von 25 Gew.-% verdünnt. Mit dieser Lacklösung wird in einem Einbrennofen ein Kupferdraht von 0,7 mm Durchmesser lackiert:

Ofenlänge: 4 m
Ofentemperatur: 400° C
Anzahl der Durchgänge: 6

Bei einer Abzugsgeschwindigkeit von 11 m/Min. erhält man einen Lackfilm von gutem Verlauf, an dem ein Hitzeschock von 260° C, eine Erweichungstemperatur >325° C und eine Abriebfestigkeit von 98 gemessen werden.

Beispiel 2

60 g 4,4'-Bis-(methoxycarbonyl-isopropylamino)-diphenylmethan werden in 530 g Butyrolacton gelöst und mit 0,1 g Triäthylendiamin als Katalysator versetzt. Dann werden bei 40° 37 g 4,4'-Diisocyanato-diphenylmethan eingetragen, die Lösung erwärmt und 2 Stunden bei 55° gerührt. Anschließend werden 96 g Trimellitsäureanhydrid und 127 g 4,4'-Diisocyanato-diphenylmethan zugegeben und die Kondensation, die unter Abspaltung von $CO_2$ und Methanol verläuft, unter Rühren in jeweils 2 Stunden bei 80°, 120°, 160°, 190°, 200° und 6 Stunden bei 205° durchgeführt. Man erhält eine braune viskose Lösung des Poly-hydantoin-imid-amids mit charakteristischen Banden für Hydantoine und Imide bei 1720 und 1775 $m^{-1}$ und für Amide bei 1675 $cm^{-1}$. Die Viskosität $\eta_{25}$ beträgt nach Verdünnen mit Butyrolacton auf 30 Gew.-% 6570 mPa s.

Durch weiteres Verdünnen mit Butyrolacton wird eine 25%ige Lösung des Reaktionsproduktes bereitet, mit der in einem Einbrennofen ein Kupferdraht von 0,7 mm Durchmesser lackiert wird:

Ofenlänge: 4 m
Ofentemperatur: 400° C
Anzahl der Durchgänge: 6

Bei einer Abzugsgeschwindigkeit von 9 m/Min. wird ein Lackfilm mit einer Erweichungstemperatur von >330° C, einem Hitzeschock von 260° C und einer Abriebfestigkeit (NEMA) von 63 erhalten.

Beispiel 3

199 g N,N'-Bis-(methoxycarbonyl-isopropyl)-4,4'-diaminodiphenylmethan und 96 g Trimellitsäureanhydrid werden in 300 g Butyrolacton und 100 g Toluol gelöst, bei 35–40° C mit 250 g 4,4'-Diisocyanato-diphenylmethan versetzt und 2 h bei 35–40° C nachgerührt. Nach Zusatz von 0,5 g Triethylendiamin wird auf 200° C erhitzt und 6 h bei 200° C auskondensiert. Durch Verdünnen mit 470 g Benzylalkohol werden 1338 g einer 35%igen Lacklösung erhalten, die nach Verdünnen mit Butyrolacton auf 15% eine Viskosität $\eta_{25}$ von 290 mPa s aufweist. Das IR-Spektrum zeigt die charakteristischen Banden für Hydantoine und Imide bei 1720 und 1770 $cm^{-1}$ und die für Amide bei 1680 $cm^{-1}$.

Durch Verdünnen mit Butyrolacton wird eine 22%ige Lösung des Reaktionsproduktes bereitet, mit der in einem Einbrennofen ein Kupferdraht von 0,7 mm Durchmesser lackiert wird.

Ofenlänge: 4 m
Ofentemperatur: 400° C
Anzahl der Durchgänge: 6

Bei einer Abzugsgeschwindigkeit von 10 m/Min. wird ein Lackfilm mit einer Erweichungstemperatur von >380° C, einem Hitzeschock von 260° C und einer Abriebfestigkeit (NEMA) von 10 erhalten.

Beispiel 4

199 g N,N'-Bis-(methoxycarbonyl-isopropyl)-4,4'-diaminodiphenylmethan und 19,2 g Trimellitsäureanhydrid werden in 300 g Butyrolacton und 100 g Toluol gelöst und bei 35–40° C mit 150 g 4,4'-Diisocyanato-diphenylmethan versetzt. Die erhaltene Lösung wird über Nacht stehengelassen, mit 0,5 g Triethylendiamin versetzt, auf 200° C erhitzt und 6 Stunden bei 200° C auskondensiert, wobei das bei der Cyclisierung entstehende Methanol und das eingesetzte Toluol abdestilliert. Nach dem Verdünnen mit 465 g Butyrolacton werden 1093 g einer 30%igen Lacklösung erhalten, die nach Verdünnen mit der gleichen Menge Butyrolacton eine Viskosität $\eta_{25}$ von 1050 mPa s besitzt. Das IR-Spektrum zeigt die charakteristischen Banden für Hydantoine und Imide bei 1720 und 1770 $cm^{-1}$ und die für Amide bei 1680 $cm^{-1}$.

Durch weiteres Verdünnen mit Butyrolacton wird eine 20%ige Lacklösung bereitet, mit der in einem Einbrennofen ein Kupferdraht von 0,7 mm Durchmesser analog Beispiel 2 lackiert wird.

Bei einer Abzugsgeschwindigkeit von 10 m/Min. wird ein Lackfilm mit einer Erweichungstemperatur von >330° C, einem Hitzeschock von 260° C und einer Abriebfestigkeit (NEMA) von 20 erhalten.

Beispiel 5

199 g 4,4'-Bis-(methoxycarbonyl-isopropylamino)-diphenylmethan und 21,8 g Pyromellitsäuredianhydrid werden in 300 g Butyrolacton gelöst und bei 35–40° C mit 150 g 4,4'-Diisocyanato-diphenylmethan versetzt. Die erhaltene Lösung wird über Nacht stehengelassen, mit 0,5 g Triethylendiamin versetzt, auf 200° C erhitzt und 6 Stunden bei 200° C auskondensiert, wobei das bei der Cyclisierung gebildete Methanol und das freiwerdende $CO_2$ ausgetragen werden. Nach Verdünnen mit 310 g Butyrolacton werden 944 g einer 35%igen Lacklösung erhalten, die mit Butyrolacton auf 15% Feststoffgehalt verdünnt eine Viskosität $\eta_{25}$ von 317 mPa s aufweist. Das IR-Spektrum zeigt die für Hydantoine und Imide charakteristischen Banden bei 1720–1775 $cm^{-1}$.

Durch Verdünnen der 35%igen Lösung mit Butyrolacton wird eine 20%ige Lacklösung bereitet, mit der in einem Einbrennofen ein Kupferdraht von 0,7 mm Durchmesser analog Beispiel 2 lackiert wird.

Bei einer Abzugsgeschwindigkeit von 10 m/Min. wird ein Lackfilm mit einer Erweichungstemperatur von >380° C, einem Hitzeschock von 260° C und einer Abriebfestigkeit (NEMA) von 21 erhalten.

Beispiel 6

398 g N,N'-Bis-(methoxycarbonyl-isopropyl)-4,4'-diamino-diphenylmethan und 38,4 g Trimellitsäureanhydrid werden in 600 g Butyrolacton und 200 g Toluol gelöst und bei 35–40° C mit 350 g 4,4'-Diisocyanatodiphenylmethan versetzt. Die erhaltene Lösung wird 2 Stunden bei 35–40° C nachgerührt, mit 27 g Diethylenglykolmonoethylther, 22 g Benzylalkohol und 1 g Triethylendiamin versetzt, auf 200° C erhitzt und 6 Stunden bei 200° C auskondensiert, wobei das eingesetzte Toluol und das bei der Cyclisierung entstehende Methanol abdestilliert wird. Außerdem werden durch Anlegen von leichtem Vakuum ungefähr 415 g Butyrolacton abdestilliert, so daß ca. 940 g eines nach dem Abkühlen spröden, ungefähr 75%igen Harzes erhalten werden. Eine 15%ige Lösung dieses Harzes in Butyrolacton weist eine Viskosität $\eta_{25}$ von 420 mPa s auf.

Eine Lacklösung, bestehend aus 1 Gew.-Teil (bezogen auf Feststoff) des oben beschriebenen Harzes und 1 Gew.-Teil eines Polyesters, hergestellt aus 1 Mol Terephthalsäuredimethylester, 0,5 Mol Glycerin und 2 Mol Ethylenglykol mit einem Hydroxylgehalt von 4%, wird mit 1% Titantetrabutylat versetzt und bei einer Abzugsgeschwindigkeit von 11 m/Min. auf Kupferdrähte von 0,9 mm Durchmesser analog Beispiel 2 eingebrannt. Die erhaltenen, lackierten Drähte erbrachten eine Erweichungstemperatur von 320° C und einen Hitzeschock von 260° C.

**Patentansprüche**

1. Verfahren zur Herstellung von Amidimidgruppen aufweisenden Poly(thio)hydantoinen durch Umsetzung von polyfunktionellen $\alpha$-Aminocarbonsäurederivaten und organischen Polyiso(thio)cyanaten oder entsprechenden Iso(thio)cyanat-Abspaltern und gegebenenfalls unter Mitverwendung von Hydroxylgruppen aufweisenden Polyestern in Lösungsmitteln, dadurch gekennzeichnet, daß die Umsetzung unter Mitverwendung von cyclischen Carbonsäureanhydridverbindungen, die noch eine weitere kondensationsfähige Gruppe enthalten, in $\gamma$-Butyrolacton und gegebenenfalls weiteren nichtphenolischen Lösungsmitteln erfolgt.

2. Verfahren nach Anspruch 1, dadurch gekennzeichnet, daß als weitere kondensationsfähige

Gruppe eine Carboxylgruppe vorhanden ist.

3. Verfahren nach Ansprüchen 1 und 2, dadurch gekennzeichnet, daß als cyclische Carbonsäureanhydridverbindung Trimellitsäureanhydrid verwendet wird.

4. Lackmischungen, insbesondere für Einbrennlacke, enthaltend Polymerlösungen, die nach den Verfahrensansprüchen 1–3 hergestellt wurden.

5. Lackmischungen nach Anspruch 4, mit einem Feststoffgehalt von 5–80 Gew.-%.

6. Lackmischungen nach Anspruche 4 oder 5, enthaltend als weitere Lackkomponente einen Polyester.

7. Lackmischungen nach Ansprüchen 4 bis 6, enthaltend als weiteres nichtphenolisches Lösungsmittel Benzoesäureethylester, Essigsäurebenzylester, Propylencarbonat, Benzylalkohol, Acetophenon, Phenoxyethanol oder einen Glykolmono- oder -dialkylether.

8. Verwendung der gemäß Ansprüchen 1 bis 3, erhaltenen Polyhydantoine zur Herstellung hitzebeständiger Beschichtungsmaterialien, Folien, Kleber und Formkörper.

## Claims

1. Process for the preparation of poly(thio)hydantoins containing amidoimide groups by reacting polyfunctional $\alpha$-aminocarboxylic acid derivatives and organic polyiso(thio)cyanates or corresponding iso(thio)cyanate-releasing compounds and optionally with the addition of hydroxyl-group-containing polyesters in solvents, characterised in that the reaction is carried out with the addition of cyclic carboxylic acid anhydride compounds which contain an additional group which is capable of condensation, in $\gamma$-butyrolactone and optionally other nonphenolic solvents.

2. Process according to claim 1, characterised in that a carboxyl group is present as the additional group capable of condensation.

3. Process according to claims 1 and 2, characterised in that trimellitic acid anhydride is used as the cyclic carboxylic acid anhydride compound.

4. Lacquer mixtures, in particular for stoving lacquers, containing polymer solutions which have been prepared according to the process claims 1–3.

5. Lacquer mixtures according to claim 4, having a solid content of 5–80% by weight.

6. Lacquer mixtures according to claims 4 and 5, containing a polyester as the further lacquer component.

7. Lacquer mixtures according to claims 4–6, containing ethyl benzoate, benzyl acetate, propylene carbonate, benzyl alcohol, acetophenone, phenoxyethanol or a glycol mono- or dialkyl ether as the further non-phenolic solvent.

8. Use of the polyhydantoins according to claims 1 to 3 for the production of heat-resistant coating materials, foils, adhesives and moulded articles.

## Revendications

1. Procédé de production de poly(thio)hydantoïnes porteuses de groupes amidimide par réaction de dérivés d'acides $\alpha$-aminocarboxyliques polyfonctionnels et de polyiso(thio)cyanates organiques ou de composés correspondants libérant un iso(thio)cyanate et en utilisant simultanément, le cas échéant, des polyesters porteurs de groupes hydroxyle dans des solvants, caractérisé en ce que la réaction est conduite en présence d'anhydrides d'acides carboxyliques cycliques, qui portent encore un autre groupe condensable, dans la $\gamma$-butyrolactone et, le cas échéant, dans d'autres solvants non phénoliques.

2. Procédé suivant la revendication 1, caractérisé en ce qu'un groupe carboxyle est présent comme autre groupe condensable.

3. Procédé suivant les revendications 1 et 2, caractérisé en ce qu'on utilise l'anhydride d'acide trimellitique comme anhydride d'acide carboxylique cyclique.

4. Mélanges pour peintures, notamment pour vernis au four, contenant des solutions de polymères qui ont été préparées selon les revendications de procédé 1 à 3.

5. Mélanges pour peintures suivant la revendication 4, ayant une teneur en matières solides de 5 à 80% en poids.

6. Mélanges pour peintures suivant les revendications 4 et 5, contenant un polyester comme autre composant de peinture.

7. Mélanges pour peintures suivant les revendications 4 à 6, contenant comme autre solvant non phénolique du benzoate d'éthyle, de l'acétate de benzyle, du carbonate de propylène, de l'alcool benzylique, de l'acétophénone, du phénoxyéthanol ou un éther mono-alkylique ou dialkylique de glycol.

8. Utilisation des polyhydantoïnes obtenues conformément aux revendications 1 à 3, pour la production de matériaux de revêtement, de feuilles, d'adhésifs et de pièces moulées stables à la chaleur.